# EUROPEAN PATENT SPECIFICATION

(11) **EP 1 311 375 B1**
(45) Date of publication and mention of the grant of the patent: **18.04.2012**
(21) Application number: 01960629.2
(22) Date of filing: 06.08.2001
(51) Int. Cl.: B01F 7/30, B01F 15/06, B29B 7/10, B29B 17/00, B29B 7/90

(54) **PROCESS FOR THE PRODUCTION OF MANUFACTURES**
VERFAHREN ZUR HERSTELLUNG VON ARTIKELN
PROCEDE DE PRODUCTION D'ARTICLES

(30) Priority: 25.08.2000 IT MI001908
(43) Date of publication of application: 21.05.2003
(73) Proprietor: Pasell s.r.l., 83020 Forino (IT)
(72) Inventor: AMITRANO, Angelo, I-33052 Aquileia (IT)
(74) Representative: Mittler, Enrico
(86) International application number: PCT/EP2001/009077
(87) International publication number: WO 2002/016098

(56) References cited:
- WO-A-00/61669
- WO-A-93/08974
- DE-A- 2 311 797
- GB-A- 1 380 339
- US-A- 5 306 458

## Description

The present invention refers to a process for the production of manufactures substantially made up of inert material and plastic material. In addition it refers to a manufacture that is suitable to act as a balance mass for machines, in particular for household appliances, that is obtained by means of the process as per what above.

In machines, as for instance household appliances, such as washing machines, dishwashers and similar, or as tractors and machine tools , masses are utilised that are suitable to statically and dynamically balance the same machines, in particular counter-weights are utilised.

Generally these counter-weights are made up of manufactures which are obtained from a conglomerate mix. In particular, the mix is made of inert materials such as sand, metallic scales, concrete and water. Depending on the cases the manufactures are also provided with a reinforcement consisting of internal reinforcements.

There are also known manufactures that are obtained with a mix of inert material and plastic material. However, they are expensive since they require great amounts of plastic material and they are difficult to produce.

DE-A-2311797 discloses a process for the manufacture of solid objects, coatings etc. by mechanically mixing pre-heated thermo-resistant fillers and thermo-plastic binders. The thermo-resistant fillers are dimensioned to suitable grain size. It is necessary to reduce the size of the thermo-resistant fillers before mixing.

US-A-2564096 discloses a milling and mixing apparatus in which a filler material and a resinous material are mixed and compressed together by rotary horizontal wheels to form a compressed mixture which leaves the mill in pre-cured or partially polymerized state.

In view of the state of the art herein described, a scope of the present invention is to provide for a process for the obtaining of manufactures from a mix of inert material and plastic material that does not show the disadvantages of the known art. In particular that has a low production cost and it is easily obtainable.

According to the present invention, these and other scopes are attained by means of a process for the production of manufactures substantially made of inert material and plastic material, as defined in claim 1.

Owing to the present invention it is possible to provide a process that is insensitive to the type and to the dimensions (within reasonable limits) of the materials being used, and that in addition to the fact that it is possible to use a low percentage of plastic material a low cost manufacture is obtained. In addition, a manufacture is obtained, that is qualitatively good in workmanship, better than concrete manufactures, since it is not subject to chalking and/or crumbling.

The characteristics and the advantages of the present invention will become evident from the following detailed description of an embodiment thereof, that is illustrated as a non limiting example in the enclosed drawings, in which:
Figure 1 represents a flow chart that describes the various stages of the process according to the present invention;
Figure 2 represents a rotary wheel mixer according to the present invention.

According to the present invention the use of plastic material preferably of the type coming from differentiated waste collection and/or scraps of production is provided. According to the process subsequently described this does not require any working before its use, it can also be accumulated on the exterior and it can have any dimension (within reasonable and compatible limits with the machines utilised in the process).

According to the present invention the use of inert material of any type, for instance calcareous material, sulphates, silicates, metallic oxides, etc.., even having various nature and even dirt, is preferably provided The size of the inert material can also have any size from powders to a dimension of 20-30 millimetre. The choice of the type of material or of the mix of materials to be used can be conditioned by the final weight of the manufacture that it is wanted to be obtained. Therefore based on the dimension of the manufacture, of the desired final weight and of the percentages of plastic material and inert material, being used, that will be described hereinafter, materials having adequate specific weight are chosen.

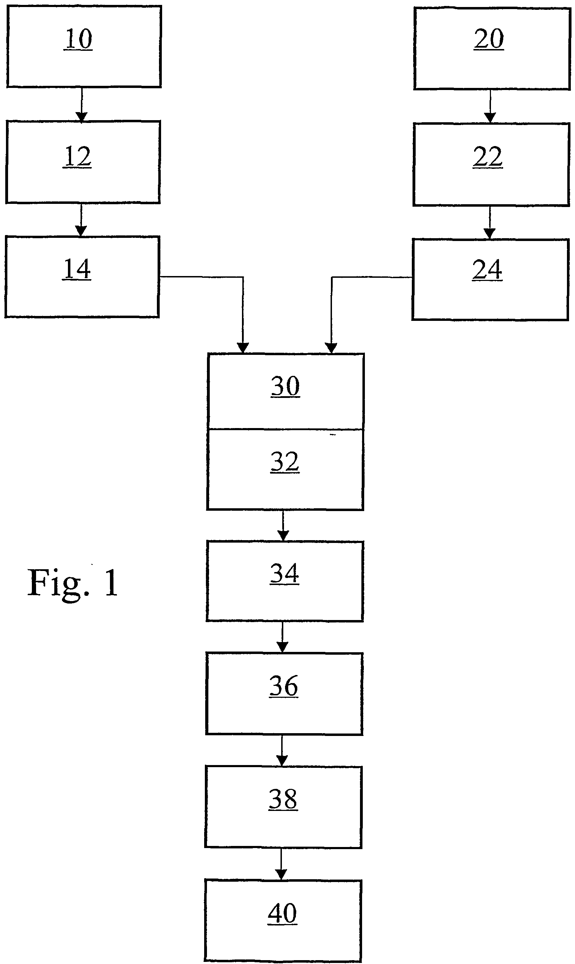

Referring to Figure 1, there is the cumulus of inert material 10 that before its use is preferably preheated 12 in oven in order to eliminate humidity and in order to subsequently accelerate the mixing and the melting of the plastic material. The preheating temperature is comprised between 100°C and 400 °C and more preferably between 250°C and 350°C, and even more preferably around 300°C. The inert material is thus weighed 14 in order to determine the amount that will be input into the mixer.

In addition there is the cumulus of plastic material 20 that is preferably preheated 22 in oven before being use. The preheating temperature is comprised between 30°C and 100 °C, and more preferably between 50°C and 80°C. The plastic material is thus weighed 24 in order to determine the amount that will be input into the mixer

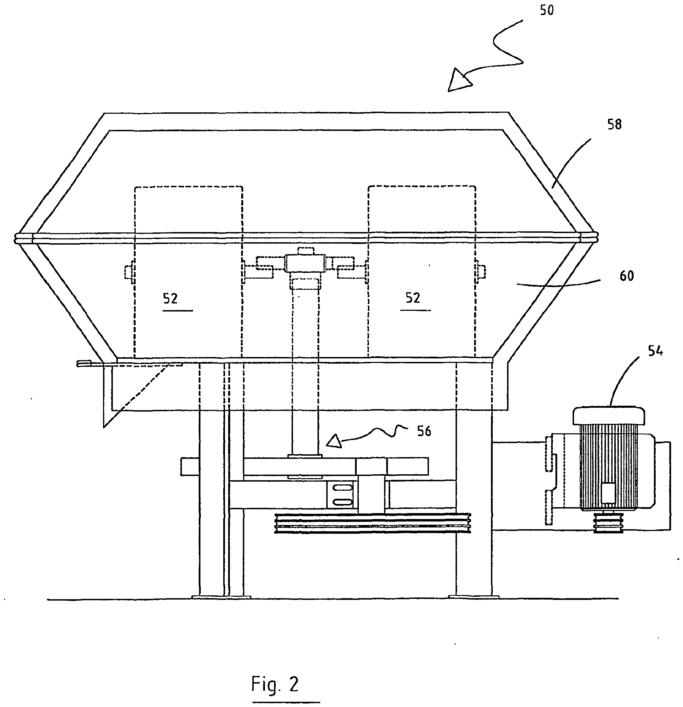

The inert material and the plastic material are then placed inside a mixer 50 for the mixing 30. The mixer 50 is a milling apparatus with milling rotary wheels, rendered in Figure 2, it comprises two wheels 52 which are set in motion by a motor 54 Through transmission means 56 the motion of the motor 54 is transferred to the wheels 52. In addition it comprises means for the insulation and closing 58 of the mixing area 60 of the inert material and the plastic material. It also comprises heating elements, not shown, in order to allow the heating 32 and therefore the melting (or in any case the transition of the plastic material into a mixture state that allows its mixing with the inert material) and the mixing of the plastic material. The rotary wheel mixer 50 is heated at a temperature comprised between 100°C and 300°C, and more preferably equal to approximately 200°C.

Preferably the inert material at first and subsequently the plastic material, that finds therefore a more favorable situation for the melting and the mixing, are inserted in the mixer 50.

The mix of inert material and plastic material inside the heated mixer 50 is brought to a temperature at which the plastic material covers completely all the surfaces of the inert matter and it binds them to each other.

The mix preferably comprises inert material in quantity comprised between 60% and 85% of the total weight, more preferably equal to about 85% and the plastic material in quantity comprised between 15% and 40% of the total weight, more preferably equal to about 15%.

Subsequently there is the stage 34 of metering and of introduction of the mix into the mould, that is the amount of mixture necessary to the filling of the mould is taken (preferably by weighting it) from the mixer. The material taken from the mixer is thus inserted into the mould by means of a press at low pressure.

The cooling 36 of the mould and consequently the cooling of the manufacture thus take place. The mould is preferably made of aluminium or of other material having high thermal conductivity and it is cooled by means of cooling liquid, preferably water.

The manufacture is extracted 38 from the mould and it is once more cooled preferably by immersing it 40 into a cooling liquid, preferably water.

## Claims

1. Process for the production of manufactures substantially made of inert material and plastic material, comprising the following stages:
to mix (30) said inert material and said plastic material in a mixer (50) with milling rotary wheels (52) having horizontal axes and at the same time to heat (32) said inert and plastic materials at a temperature at which the plastic material covers completely all the surfaces of the inert material and binds them to each other.
to introduce (34) the material coming from the previous stage into a mould;
to cool (36) said mould.

2. Process for the production of manufactures according to claim 1 **characterised in that** previously to the mixing stage (30), said inert material is preheated (12) at a temperature comprised between 100°C and 400 °C.

3. Process for the production of manufactures according to claim 1 **characterised in that** previously to the mixing stage (30), said plastic material is preheated (22) at a temperature comprised between 30°C and 100 °C.

4. Process for the production of manufactures according to claim 1 **characterised in that** the mixing stage (30) mixes inert material in quantity comprised between 60% and 85% of the total weight and plastic material in quantity comprised between 15% and 40% of the total weight.

5. Process for the production of manufactures according to claim 1 **characterised in that** the heating stage (32) takes place in said rotary wheel mixer (50).

6. Process for the production of manufactures according to claim 5 **characterised in that** the rotary wheel mixer (50) is heated at a temperature comprised between 100 and 300°C.

7. Process for the production of manufactures according to claim 1 **characterised in that** the stage of introduction (34) of the material into a mould takes place at a low pressure.

8. Process for the production of manufactures according to claim 1 **characterised in that** said mould has high thermal conductivity.

9. Process for the production of manufactures according to claim 1 **characterised in that** said mould is cooled (36) by means of cooling liquid.

10. Process for the production of manufactures according to claim 1 **characterised in that** it comprises the stage to extract (38) the manufacture from said mould and to immerse (40) it into a cooling liquid.

## Patentansprüche

1. Verfahren zum Herstellen von Erzeugnissen, die im Wesentlichen aus inertem Material und Kunststoffmaterial hergestellt sind, umfassend folgende Schritte:
Mischen (30) des inerten Materials und des Kunststoffmaterials in einem Mischer (50) mit sich drehenden Mahlrädern (52), die horizontale Achsen aufweisen und zugleich das inerte Material und das Kunststoffmaterial auf eine Temperatur erhitzen (32), bei welcher das Kunststoffmaterial alle Oberflächen des inerten Materials vollständig bedeckt und sie aneinander bindet;
Einbringen des Materials, das von vorherigen Schritten kommt, in eine Form;
Kühlen (36) der Form.

2. Verfahren zum Herstellen von Erzeugnissen nach Anspruch 1, **dadurch gekennzeichnet, dass** das inerte Material vor dem Misch-Schritt (30) auf eine Temperatur zwischen 100°C und 400°C vorgewärmt wird.

3. Verfahren zum Herstellen von Erzeugnissen nach Anspruch 1, **dadurch gekennzeichnet, dass** das Kunststoffmaterial vor dem Misch-Schritt (30) auf eine Temperatur zwischen 30°C und 100°C vorgewärmt wird.

4. Verfahren zum Herstellen von Erzeugnissen nach Anspruch 1, **dadurch gekennzeichnet, dass** beim Misch-Schritt (30) das inerte Material in einer Quantität zwischen 60% und 85% des Gesamtgewichts und das Kunststoffmaterial in einer Quantität zwischen 15% und 40% des Gesamtgewichts gemischt wird.

5. Verfahren zum Herstellen von Erzeugnissen nach Anspruch 1, **dadurch gekennzeichnet, dass** der Erhitzungsschritt (32) im Mischer (50) mit sich drehenden Mahlrädern stattfindet.

6. Verfahren zum Herstellen von Erzeugnissen nach Anspruch 5, **dadurch gekennzeichnet, dass** der Mischer (50) mit sich drehenden Mahlrädern auf eine Temperatur zwischen 100 und 300°C erwärmt wird.

7. Verfahren zum Herstellen von Erzeugnissen nach Anspruch 1, **dadurch gekennzeichnet, dass** der Schritt des Einbringens des Materials (50) in eine Form bei einem niedrigen Druck stattfindet.

8. Verfahren zum Herstellen von Erzeugnissen nach Anspruch 1, **dadurch gekennzeichnet, dass** die Form eine hohe thermische Leitfähigkeit hat.

9. Verfahren zum Herstellen von Erzeugnissen nach Anspruch 1, **dadurch gekennzeichnet, dass** die Form mittels einer Kühlflüssigkeit gekühlt wird (36).

10. Verfahren zum Herstellen von Erzeugnissen nach Anspruch 1, **dadurch gekennzeichnet, dass** es den Schritt des Extrahierens (38) des Erzeugnisses aus der Form und des Eintauchens (40) in eine Kühlflüssigkeit umfasst.

## Revendications

1. Procédé pour la production de produits manufacturés réalisés essentiellement en matériau inerte et en matériau plastique, comprenant les étapes suivantes qui consistent :
à mélanger (30) ledit matériau inerte et ledit matériau plastique dans un mélangeur (50) avec des roues rotatives (52) de broyage ayant des axes horizontaux et à chauffer en même temps (32) lesdits matériaux inerte et plastique à une température à laquelle le matériau plastique recouvre complètement toutes les surfaces du matériau inerte et les lie les unes aux autres.
à introduire (34) le matériau provenant de l'étape précédente dans un moule ;
à refroidir (36) ledit moule.

2. Procédé pour la production de produits manufacturés selon la revendication 1, **caractérisé en ce qu'**avant l'étape de mélange (30), ledit matériau inerte est préchauffé (12) à une température comprise entre 100°C et 400°C.

3. Procédé pour la production de produits manufacturés selon la revendication 1, **caractérisé en ce qu'**avant l'étape de mélange (30), ledit matériau plastique est préchauffé (22) à une température comprise entre 30°C et 100°C.

4. Procédé pour la production de produits manufacturés selon la revendication 1, **caractérisé en ce que** l'étape de mélange (30) mélange le matériau inerte en une quantité comprise entre 60% et 85% du poids total et le matériau plastique en une quantité comprise entre 15% et 40% du poids total.

5. Procédé pour la production de produits manufacturés selon la revendication 1, **caractérisé en ce que** l'étape de chauffage (32) a lieu dans ledit mélangeur (50) à roues rotatives.

6. Procédé pour la production de produits manufacturés selon la revendication 5, **caractérisé en ce que** le mélangeur (50) à roues rotatives est chauffé à une température comprise entre 100°C et 300°C.

7. Procédé pour la production de produits manufacturés selon la revendication 1, **caractérisé en ce que** l'étape d'introduction (34) du matériau dans un moule a lieu à basse pression.

8. Procédé pour la production de produits manufacturés selon la revendication 1, **caractérisé en ce que** ledit moule possède une conductivité thermique élevée.

9. Procédé pour la production de produits manufacturés selon la revendication 1, **caractérisé en ce que** ledit moule est refroidi (36) au moyen d'un liquide de refroidissement.

10. Procédé pour la production de produits manufacturés selon la revendication 1, **caractérisé en ce qu'**il comprend l'étape qui consiste à extraire (38) le produit manufacturé dudit moule et à l'immerger (40) dans un liquide de refroidissement
